# EUROPEAN PATENT SPECIFICATION

(11) **EP 4 465 436 B1**
(45) Date of publication and mention of the grant of the patent: **07.10.2026**
(21) Application number: 23883043.4
(22) Date of filing: 24.10.2023
(51) Int. Cl.: H01M 50/591, C08K 3/36, C08L 83/04, C08G 77/20, H01M 50/204, H01M 50/503, H01M 50/24, H01M 50/517, H01M 50/588, H01M 50/522, H01M 50/524, H01M 50/526

(54) **FIREPROOF BUSBAR CAP AND BATTERY PACK COMPRISING SAME**
FEUERFESTE SAMMELSCHIENENKAPPE UND BATTERIEPACK DAMIT
CHAPEAU DE BARRE OMNIBUS IGNIFUGE ET BLOC-BATTERIE LE COMPRENANT

(30) Priority: 26.10.2022 KR 20220139407
(43) Date of publication of application: 20.11.2024
(73) Proprietor: LG Energy Solution, Ltd., Seoul 07335 (KR)
(72) Inventor: YUN, Sun Woo, Daejeon 34122 (KR)
(74) Representative: Goddar, Heinz J.
(86) International application number: PCT/KR2023/016518
(87) International publication number: WO 2024/090937

(56) References cited:
- CN-U- 215 770 643
- KR-A- 20140 136 246
- KR-A- 20200 054 715
- KR-A- 20210 088 170
- KR-A- 20220 118 636
- KR-B1- 102 270 734
- US-A- 5 985 480
- US-A1- 2019 305 282
- US-A1- 2022 311 101

## Description

### [Technical Field]

The present invention relates to a fire-resistant bus bar cap and a battery pack including the same.

More specifically, the present invention relates to a fire-resistant bus bar cap including a cap body formed of a fire-resistant silicon ceramicized at high temperatures and a protective layer covering the cap body to maintain insulation and airtight properties even at high temperatures at which ignition occurs in a battery pack, and a battery pack including the same.

### [Background Art]

A battery pack for use in electric vehicles, etc. has a structure in which a plurality of battery modules including a plurality of secondary batteries are connected in series or in parallel to obtain high power. The secondary batteries each include positive and negative current collectors, a separator, an active material, an electrolyte, etc. and thus can be repeatedly charged and discharged through an electrochemical reaction between these components.

A bus bar is used to electrically connect the battery modules. The bus bar is used to electrically connect terminal parts of adjacent battery modules or to connect battery modules to an external electric device.

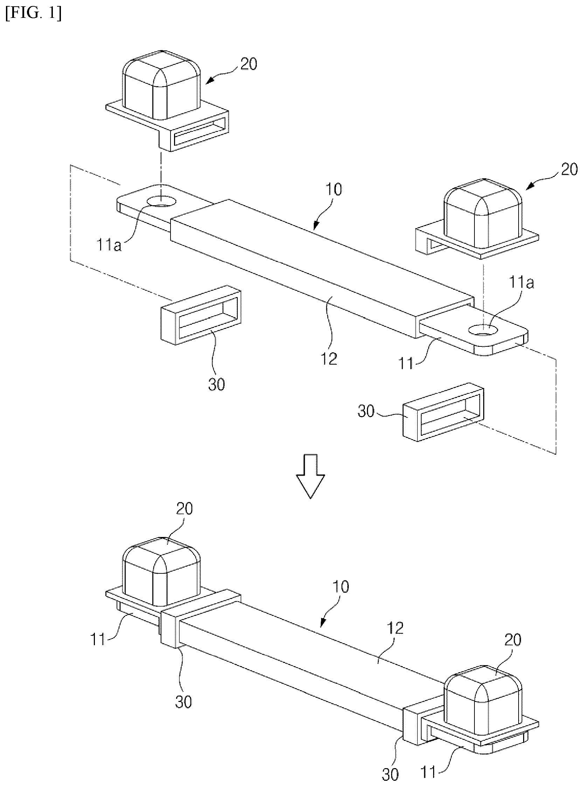

FIG. 1 is a schematic diagram illustrating an assembly structure of a bus bar and a cap of the related art.

As shown in FIG. 1, a bus bar 10 of the related art includes a bus bar conductor part 11 and a sheath layer 12 surrounding the bus bar conductor part 11. The bus bar conductor part 11 is, for example, a high-purity copper conductor part such as C1100 or a conductor part formed of a metal such as aluminum. The sheath layer 12 is formed of general silicone rubber or epoxy. Conventionally, a cap 20 is attached to the sheath layer 12 of the bus bar 10 using a wear-resistant tape 30 or the like. The cap 20 is formed separately to be freely opened or closed when the bus bar 10 is coupled to another electrical connection part by inserting fastening members into fastening holes 11a in both ends of the bus bar 10.

However, the cap 20 is a soft rubber cap and thus is low in insulating properties and vulnerable to impact. In particular, when in a battery pack, inner components of the battery pack are electrically connected using the bus bar 10 of the related art, not only the rubber cap but also the sheath layer 12 formed of silicone rubber or epoxy melt and the bus bar conductor part 11 is exposed to the outside due to very high temperature of flames (500 to 800 °C or 800 °C or higher, and 1000 °C or higher in a severe case), when the flames occur in the battery pack. In this case, the exposed bus bar conductor part comes into electrical contact with other metal parts in the battery pack, thus causing an electrical short circuit to occur, and the flames spread further due to heat generated due to the electrical short circuit.

As described above, there have been recent demands to essentially design battery packs such that flames are prevented from leaking to the outside of the battery packs when ignition occurs in the battery packs.

In addition, there is a need to design a bus bar conductor part and an electrical conductor part connected thereto to be thermally and electrically insulated from surroundings even at high temperatures when flames occur in the battery pack.

As described above, it is necessary to develop a technique for improving an insulation level and assemblability while securing fire resistance at high temperatures to maintain electrical insulation.

### [Related Art Literature]

### [Patent Document]

Korean Patent Publication Laid-Open No. 10-2022-0001228

US 2022/311101 A1 discloses a fire-resistant bus bar cap which covers a bus bar and an electrical connection part coupled to the bus bar, the fire-resistant bus bar cap comprising: a cap body of a high temperature material that includes therein an insertion space of a fastening member for fastening the bus bar and the electrical connection part, and a protective layer covering the cap body of the high temperature material.

CN 215770643 U discloses fire-resistant silicone used in a bus bar connector.

### [Disclosure]

### [Technical Problem]

The present invention is directed to providing a fire-resistant bus bar cap for maintaining thermal and electrical insulation as long as possible even when flames occur in a battery pack.

The present invention is also directed to providing a battery pack including the fire-resistant bus bar cap.

### [Technical Solution]

According to an aspect of the present invention, a fire-resistant bus bar cap, which covers a bus bar and an electrical connection part coupled to the bus bar, includes a cap body that includes therein an insertion space of a fastening member for fastening the bus bar and the electrical connection part, and a protective layer covering the cap body of the fire-resistant silicone, wherein the cap body (110) is of a fire resistant silicone ceramicized at high temperature, and
wherein the cap body (110) of the fire-resistant silicone is ceramicized by sintering a silicone resin containing a silicone compound represented by Chemical Formula 1 below and a metal oxide containing silicon oxide: 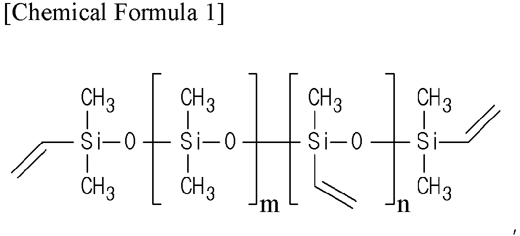
wherein m and n are each an integer of 10 to 30.

The fire-resistant silicone may be ceramicized at a temperature of 500 to 1700 °C.

The silicone resin and the metal oxide may be contained in a weight ratio of 1:0.5 to 1:1.5.

The metal oxide containing silicon oxide may contain at least one of pure silicon dioxide, silica, quartz, silica stone, tridymite, and keatite.

The protective layer may be a glass fiber layer or a mica layer.

The protective layer may be provided on an inner circumferential surface of the insertion space of the fastening member of the cap body of the fire-resistant silicone.

The cap body of the fire-resistant silicone may include a base part configured to cover either sides of the bus bar or the sides of the bus bar and sides of the electrical connection parts, and a fastening member insertion part extending upward from the base part, including the insertion space of the fastening member therein, and configured to cover upper surfaces of the bus bar and the electric connection part.

A screw groove corresponding to a screw thread of the fastening member may be provided along an inner circumferential surface of the cap body of the fire-resistant silicone including the insertion space of the fastening member.

A screw coupling member configured to be coupled to the fastening member may be coupled to the insertion space of the fastening member.

The screw coupling member may be integrally coupled to the fire-resistant bus bar cap by insert injection molding performed by inserting the screw coupling member into a mold and injection molding the fire-resistant silicone.

According to another aspect of the present invention, a battery pack includes a plurality of battery modules, an anti-flame partition installed between the plurality of battery modules, a bus bar configured to electrically connect the plurality of battery modules, the fire-resistant bus bar cap of any one of claims 1 to 11 for covering the plurality of battery modules and the an electrical connection part of the bus bar, and a pack housing accommodating the plurality of battery modules and the anti-flame partition.

The anti-flame partition may be provided with a bus bar installation through-hole or a bus bar installation groove, and the bus bar may be seated in the bus bar installation through-hole or the bus bar installation groove.

Both ends of the bus bar may be electrically coupled to terminal parts of battery modules located at both sides of the anti-flame partition, and the fire-resistant bus bar cap may cover the both ends and electrical connection parts of the terminal parts.

### [Advantageous Effects]

A fire-resistant bus bar cap of the present invention includes a cap body of a fire-resistant silicone that is ceramicized to reliably cover a bus bar and an electrical connection part when flames occur in a pack instead of a rubber cap burned in flames, thus maintaining insulation and airtight characteristics even at high temperatures.

The fire-resistant bus bar cap of the present invention may further include a protective layer to cover the cap body of the fire-resistant silicone, so that the protective layer may primarily function as a fire-resistant wall and simultaneously prevent the cap body of the fire-resistant silicone from being directly exposed to flames, thereby maintaining overall shape and dimensions.

### [Brief Description of the Drawings]

FIG. 1 is a schematic diagram illustrating an assembly structure of a bus bar and a cap of the related art.
FIG. 2 is a side cross-sectional view illustrating a coupling relationship between a fire-resistant bus bar cap and a bus bar according to an embodiment of the present invention.
FIG. 3 is a photograph of a glass fiber layer included in a fire-resistant bus bar of the present invention.
FIG. 4 is a side cross-sectional view illustrating a coupling relationship between a fire-resistant bus bar cap and a bus bar according to another embodiment of the present invention.
FIG. 5 is a side cross-sectional view illustrating a coupling relationship between a fire-resistant bus bar cap and a bus bar according to another embodiment of the present invention.
FIG. 6 is a side cross-sectional view illustrating a coupling relationship between a fire-resistant bus bar cap and a bus bar according to another embodiment of the present invention.
FIG. 7 is a side cross-sectional view illustrating a coupling relationship between a fire-resistant bus bar cap and a bus bar according to another embodiment of the present invention.
FIG. 8 is a schematic diagram illustrating a molding process of the fire-resistant bus bar cap of FIG. 7.
FIG. 9 is a schematic diagram illustrating a coupling relationship between the fire-resistant bus bar cap of FIG. 7 and a busbar covering part.
FIG. 10 is a schematic view illustrating an example of a structure of a battery pack in which a fire-resistant bus bar of the present invention is installed.
FIG. 11 is a schematic view illustrating another example of a structure of a battery pack in which a fire-resistant bus bar of the present invention is installed.
FIG. 12 is a side cross-sectional view illustrating a state in which a fire-resistant bus bar according to the present invention is installed in a battery pack.

### [Best Mode]

Hereinafter, a configuration of the present invention will be described in detail with reference to the accompanying drawings and various embodiments. Embodiments described below are provided as examples to help the understanding of the present invention, the accompanying drawings are not drawn on actual scale to help the understanding of the present invention, and the sizes of some components may be exaggerated.

The present invention may be embodied in many different forms and implemented in various embodiments. Thus, certain embodiments are illustrated in the drawings and described in detail herein. It should be, however, understood that the present invention is not limited to particular embodiments and include all modifications, equivalents, and alternatives falling within the idea and scope of the present invention.

### [Fire-resistant Bus Bar Cap]

A fire-resistant bus bar cap of the present invention is a bus bar cap covering a bus bar and an electrical connection part coupled to the bus bar, and includes a cap body of a fire-resistant silicone that includes therein an insertion space of a fastening member for fastening the bus bar and the electrical connection part and a protective layer covering the cap body of the fire-resistant silicone.

The bus bar may include a bus bar body that is a metal conductor, and a covering part covering the bus bar. The metal conductor part may be formed of a high-purity tough pitch copper material with purity of 99.9% or more, e.g., C1100, or an aluminum material. Both ends of the metal conductor part are electrically connected to a corresponding electrical connection part.

The electrical connection part may be a bus bar fastened to one bus bar. Alternatively, the electrical connection part may be a terminal part of a battery module fastened to the bus bar. However, the corresponding electrical connection part is not limited thereto and may be an electric connection part of another part or component as long as it can be electrically connected to the bus bar.

The fire-resistant bus bar cap of the present invention includes the cap body of the fire-resistant silicone ceramicized at high temperatures and the protective layer covering the cap body of the fire-resistant silicone.

The fire-resistant silicone is ceramicized at high temperatures. The fire-resistant silicone may be ceramicized at a temperature of 500 to 1700 °C. The fire-resistant silicone of the present invention with a fire-resistant temperature of 500 °C or higher is distinguished from a heat-resistant silicone with a heat-resistant temperature of less than 300 °C. The heat-resistant silicone is a silicone resin or rubber composition that is a material with flexibility and bendability that are characteristics of a silicone but is burned out or burned into ashes at a high temperature of 500 °C or higher. Therefore, there is a limit to applying the heat-resistant silicone to prevent a short circuit from occurring in a battery pack during heat propagation or prevent heat propagation.

The cap body of the fire-resistant silicone is ceramicized, i.e., it exhibits "fire-resistant" performance, at a high temperature of 500 °C or higher, thus maintaining insulation and airtightness characteristics in a battery pack even when flames occur.

As described above, a fire-resistant bus bar cap according to the present invention includes a fire-resistant silicone and thus exhibits high fire-resistant performance.

The fire-resistant silicone is a composition containing a silicone resin and a metal oxide as main components and thus exhibits flexibility and bendability, which are characteristics of a silicon, at room temperature. In addition, the fire-resistant silicone has a certain level of elasticity and thus exhibits high impact resistance and insulation, and a silicone sintered body with a complex ceramic structure may be formed due to sintering of the silicone resin and the metal oxide when the fire-resistant silicone is exposed to a high temperature.

Specifically, the silicone resin contained in the fire-resistant silicone produces silica in powder form when burned at a high temperature. The produced silica reacts with the metal oxide contained in the fire-resistant silicone to form an "eutectic mixture" on an edge of the metal oxide, so that bridging may be performed between the silica and the metal oxide, thus causing the formation of a ceramic product that is cured at an ignition temperature and condensed when cooled. Such a ceramic body prevents a short-circuit or disconnection between conductors due to damage to the cap body of the fire-resistant silicone even when external mechanical impact is applied or moisture penetrates in the case of a fire, thereby performing an electrical function of the bus bar.

To this end, the fire-resistant silicone according to the present invention includes a silicone resin and a metal oxide.

The silicone resin is not particularly limited as long as it is a resin containing silicon (Si) in a molecule and contains a silicone compound represented by the following Chemical Formula 1 (hereinafter referred to as a silicone compound of Chemical Formula 1):

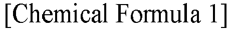

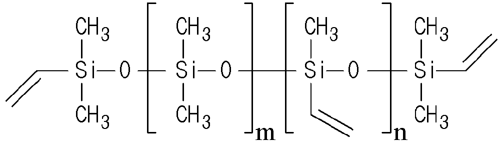

In Chemical Formula 1, m and n are each an integer of 10 to 30.

In Chemical Formula 1, the silicone compound includes a methylsiloxane repeating unit, and includes a vinyl group at the inside of and an end of the methylsiloxane repeating unit. The vinyl group is contained in the repeating unit as well as at the end of the silicone compound of Chemical Formula 1 to increase a degree of polymerization of the silicone resin when exposed to a high temperature, thereby implementing excellent fire-resistance characteristics compared to a silicone compound that does not contain the vinyl group.

In addition, the weight-average molecular weight of the silicone compound of Chemical Formula 1 may be adjusted to be in a specific range. The silicone compound of Chemical Formula 1 is a compound serving as a base of the silicone resin and thus may affect the physical properties of the fire-resistant silicone at room temperature and high temperatures according to the weight-average molecular weight of the silicone compound of Chemical Formula 1. For example, when the weight-average molecular weight of the silicone compound of Chemical Formula 1 is excessively high, the viscosity of the silicone resin increases and thus reactivity may decrease during high-temperature sintering, and when the weight-average molecular weight is extremely low, the elasticity and flexibility of the silicone resin at room temperature decrease, thus reducing the manufacturing processability, impact resistance, etc. of the fire-resistant bus bar cap. Therefore, the weight-average molecular weight of the silicone compound of Chemical Formula 1 according to the present invention may be adjusted to be in a range of 1,000 to 9,000 g/mol, and specifically, a range of 3,000 to 8,000 g/mol or a range of 5,000 to 7,000 g/mol.

In addition, the metal oxide is a composition containing silicon oxide and may function as a crystalline nucleus to form a high-density ceramic body together with the silicone resin described above when exposed to high temperatures.

The metal oxide may include at least one of silicon dioxide, silica, quartz, silica stone, tridymite, and keatite. The metal oxide may include pure silicon dioxide (SiO₂) and a mineral, e.g., quartz, which contains silicon dioxide (SiO₂) as a main component, is economically feasible, has a high melting point (high fire-resistance) and a high sintering degree, and may exhibit excellent electrical insulation performance. In particular, silicon dioxide, silica, quartz, etc. may contribute to improving various performances in a sintering process, cause fire-resistant silicone to be easily dissolved and molded, and reduce defects that may occur in ceramic bodies.

In addition, the metal oxide preferably has a crystal structure that increases fire resistance, insulation, mechanical strength, etc. when sintered together with a silicone resin. The metal oxide may be in the form of powder, and may have, but is not limited to, a size of 200 µm or less, for example, a size of 0.1 µm to 200 µm or a size of 0.1 µm to 100 µm.

The silicone resin may further contain a silicone compound represented by Chemical Formula 2 below (hereinafter referred to as "silicone compound of Chemical Formula 2"), and the silicone compound of Chemical Formula 2 participates in the sintering of the metal oxide at a high temperature together with the silicone compound of Chemical Formula 1 to form a silicone sintered body.

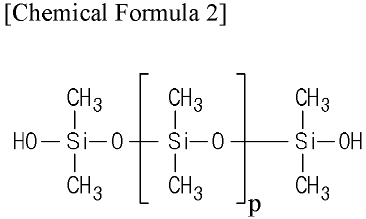

In Chemical Formula 2 above, p is an integer of 10 to 30.

The silicone compound of Chemical Formula 2 may increase the flexibility of the fire-resistant silicone at room temperature and induce the termination of the sintering of the silicone resin through dehydration condensation with the silicone compound of Chemical Formula 1 during sintering, thereby terminating the formation reaction of the ceramic body.

To this end, the silicone compound of Chemical Formula 2 may be used in an amount of less than 10 parts by weight, for example, 0.5 to 9 parts by weight, 1 to 6 parts by weight, or 2 to 5 parts by weight, based on the 100 parts by weight of the fire-resistant silicone.

In addition, the fire-resistant silicone may contain a silicone resin and a metal oxide in a certain ratio to realize high elasticity at room temperature and form a ceramic body quickly when exposed to high temperatures.

Specifically, in the fire-resistant silicone, a weight ratio between the silicone resin and the metal oxide may be 1:0.5 to 1:1.5, and specifically, 1:0.8 to 1:1.2. When the weight ratio of the metal oxide is less than 0.5, it is difficult to obtain a ceramic structure having a high-density crystal structure at high temperatures and thus sufficient fire resistance and mechanical strength are not achieved. When the weight ratio of the metal oxide exceeds 1.5, the flexibility of the fire-resistant silicone decreases at room temperature and thus the fire-resistant silicone is difficult to be processed.

For example, the fire-resistant silicone of the present invention may contain 35 to 50 wt% of the silicone compound of Chemical Formula 1, 16 to 32 wt% quartz, 10 to 27 wt% silicon dioxide, and 1 to 6 wt% of the silicone compound of Chemical Formula 2, and may further contain a certain solvent to increase processability during the manufacture of the fire-resistant silicone in some cases.

As described above, the fire-resistant silicone according to the present invention is cured and ceramicized by sintering the silicone resin and the metal oxide at 500 °C or higher. The fire-resistant silicone may be ceramicized at temperatures of up to 1700 °C, and theoretically can be kept partially ceramicized even at temperatures above 1700 °C. However, at a temperature above 1700 °C, a time period during which the fire-resistant silicone is kept ceramicized may decrease, thus causing a failure of the maintenance of fire-resistance performance required inside a battery pack.

As described above, the fire-resistant silicone has the same properties as rubber having bendability, flexibility, and elasticity before being ceramicized. Therefore, the cap body of the fire-resistant silicone is easy to injection mold as described below.

The cap body of the fire-resistant silicone is flexible before being ceramicized and thus may flexibly inserted along the shapes of the bus bar and the electric connection part. Therefore, when the fire-resistant bus bar cap of the present invention is installed in the battery pack, it is possible to easily respond to even a slight assembly tolerance, thus improving assemblability.

Meanwhile, when the fire-resistant silicone is ceramicized at a high temperature, the fire-resistant silicone is thermally and electrically insulated but the mechanical strength thereof decreases slightly and thus the fire-resistant silicone is likely to be broken by an external force. According to the present invention, a protective layer is provided to cover the cap body of the fire-resistant silicone to structurally improve the rigidity of the cap body of the fire-resistant silicone.

The protective layer is a layer covering the outside of the cap body of the fire-resistant silicone to prevent the cap body of the fire-resistant silicone from being directly exposed to flames. That is, the protective layer primarily functions as a fire-resistant wall. In addition, when the cap body of the fire-resistant silicone is ceramicized, the protective layer covers the ceramicized cap body to maintain an overall shape and dimensions of the ceramicized cap body. In addition, the protective layer protects the inside of the fire-resistant bus bar cap from physical contact with the surroundings to prevent a short circuit.

A material of the protective layer may be, for example, glass fiber or mica material with insulating and heat resistance properties. For example, the cap body of the fire-resistant silicone may be prevented from being exposed to the outside by winding a glass fiber tape or mica tape around an outer side of the cap body of the fire-resistant silicone. However, the protective layer is not limited thereto and may be formed of a different material with excellent insulation or heat-resistance properties.

A shape of the fire-resistant bus bar cap will be described in detail with respect to the following embodiments.

### [Embodiments of the Present Invention]

### (First Embodiment)

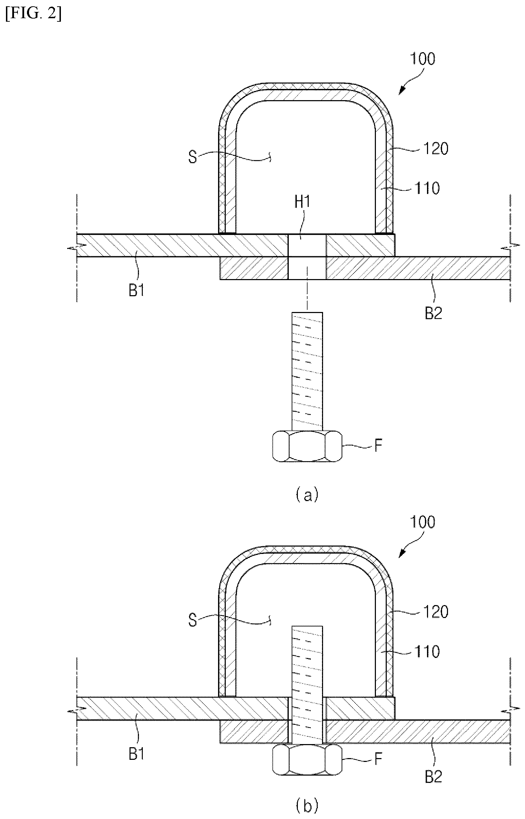

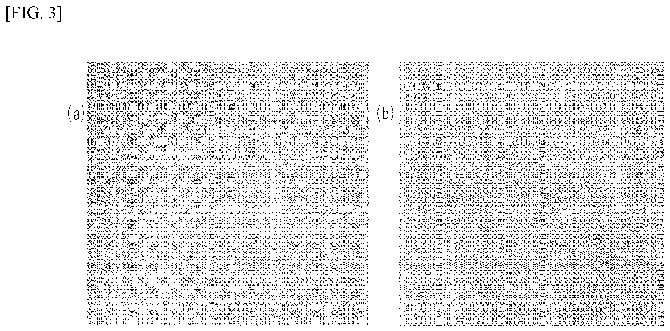

FIG. 2 is a side cross-sectional view illustrating a coupling relationship between a fire-resistant bus bar cap and a bus bar according to an embodiment of the present invention. FIG. 3 is a photograph of a glass fiber layer included in a fire-resistant bus bar of the present invention.

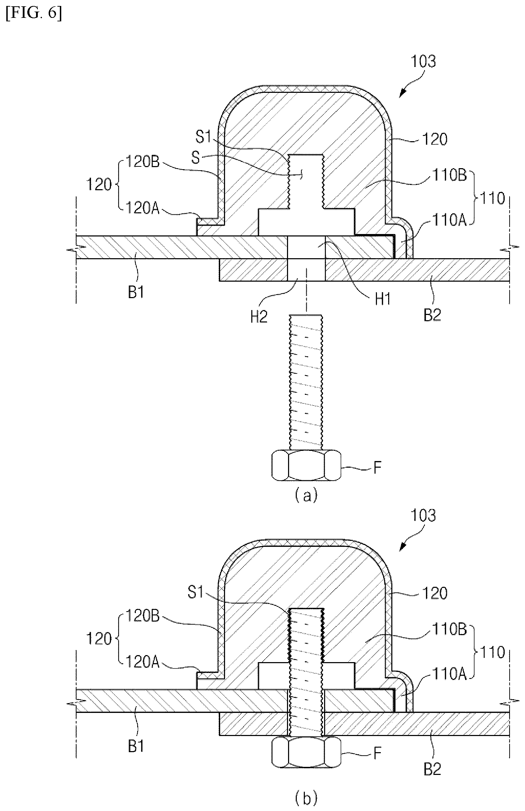

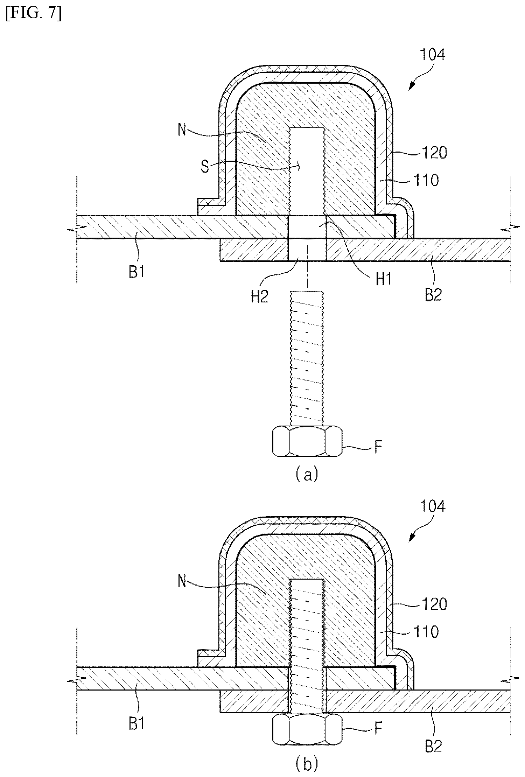

In the present embodiment, two bus bars B1 and B2 are electrically connected, and electrical connection parts thereof are covered with a fire-resistant bus bar cap 100. That is, in the present embodiment, an electrical connection part coupled to the bus bar B1 is the bus bar B2. The two busbars B1 and B2 include fastening holes H1 and H2 (see Figs. 6 and 7) at both ends thereof, respectively, and are electrically coupled to each other by inserting and coupling a fastening member F into the fastening holes H1 and H2.

As shown in the drawings, the fire-resistant bus bar cap 100 includes a cap body 110 of a fire-resistant silicone. The cap body 110 covers at least the electrical connection parts of the bus bars B1 and B2. An insertion space S of the fastening member F is provided inside the cap body 110. That is, as shown in FIG. 2, when the fastening member F is fastened to the bus bars B1 and B2, an exposed end of the fastening member F is inserted into the insertion space S inside the cap body 110. Accordingly, the fastening member F is protected by the cap body 110, thereby preventing a short circuit due to contact with other external components. As shown in the drawings, the insertion space S may be a space sufficient to accommodate the fastening member F. When necessary, a coupling member (e.g., a nut), which will be described below, corresponding to the fastening member F may be installed in the insertion space S. Alternatively, when necessary, the size of the insertion space S may be reduced such that ends of the fastening members F may be tightly fitted into the insertion space S.

The cap body 110 covers upper surfaces of the electrical connection parts of the bus bars B1 and B2 but the shape thereof may be changed to cover not only the upper surfaces but also sides of the electrical connection parts as needed. That is, a horizontal width of the cap body 110 may be increased or a lower end thereof may be extended downward to cover the sides of the electrical connection parts of the bus bars B1 and B2 or a wide flange part (base part) may be provided under the cap body 110. Accordingly, the bus bars B1 and B2 and all the upper surfaces and sides of the electrical connection parts thereof are covered to further improve the insulation of the electrical connection parts.

The cap body 110 may be manufactured by a known molding method, e.g., injection molding. For example, the cap body 110 may be molded by injecting a fire-resistant silicone into a mold having the same shape as the cap body 110. As described above, the fire-resistant silicone may be, for example, a mixture of a silicone resin and a metal oxide and be included in a certain solvent in the form of a coating solution or slurry with fluidity. The cap body 110 may be molded by injecting a fire-resistant silicone coating solution or slurry into the mold. The cap body 110 of the present invention may be obtained by removing the mold after drying and curing processes are performed.

The fire-resistant bus bar cap 100 of the present invention includes a protective layer 120 covering the cap body 110. A shape of the protective layer 120 follows a shape of an exterior of the cap body 110 to entirely cover the outside of the cap body 110.

For example, the cap body 110 of the present invention may be obtained by winding a tape of the protective layer 120 such as a glass fiber tape or a mica tape around the cap body 110.

A material of the protective layer 120 may be, for example, a glass fiber or mica material with insulating and heat-resistance properties. That is, the cap body 110 may be prevented from being exposed to the outside by winding a glass fiber tape or mica tape around an outer side of the cap body 110.

FIG. 3 shows a photograph of a glass fiber layer.

A glass fiber is an inorganic fibrous material mainly composed of a silicate. The glass fiber may be in the form of glass fiber fabric (see FIG. 3a) obtained by weaving yarn formed by twisting and winding glass fiber strands or the form of nonwoven fabric (see FIG. 3b). The fire-resistant bus bar cap 100 of the present invention may be manufactured by applying an adhesive to the glass fiber fabric or nonwoven fabric and attaching the glass fiber fabric or nonwoven fabric to the above-described cap body 110. Glass fiber has fire-resistant properties and high electrical insulation.

Mica is one of silicate minerals, has a layered structure, generally has a hexagonal crystal shape, and is used as an electrical insulating material or an insulating material. Mica exhibits better fire resistance than the glass fiber. Therefore, mica is more preferable as a material of the protective layer 120 protecting the fire-resistant silicon cap body 110. However, the protective layer 120 is not limited thereto and may be formed of a different material with excellent insulation or heat-resistance properties.

For example, the protective layer 120 may be formed by winding a tape of the protective layer 120, which is processed in the form of a tape, around the cap body 110. However, a method of forming the protective layer 120 is not limited thereto. For example, the protective layer 120 may be formed on the fire-resistant silicon cap body 110 by coating, applying, spraying or other known methods.

### (Second Embodiment)

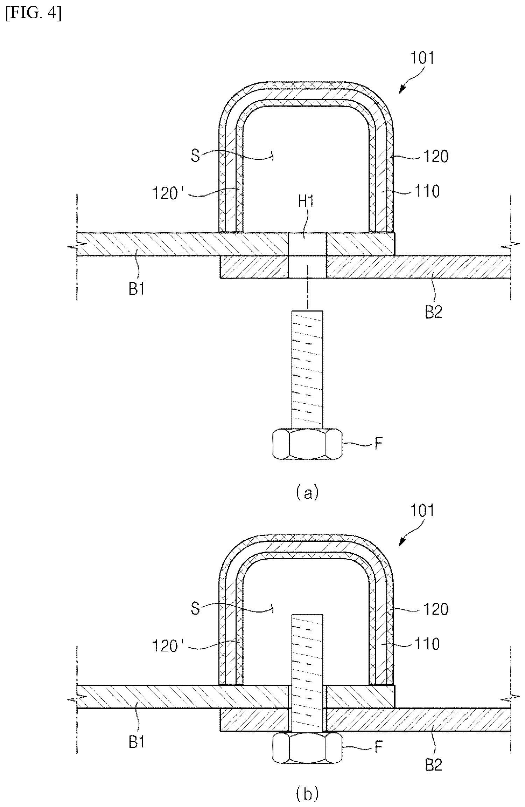

FIG. 4 is a side cross-sectional view illustrating a coupling relationship between a fire-resistant bus bar cap and a bus bar according to another embodiment of the present invention.

A fire-resistant bus bar cap 101 of the present embodiment includes not only a protective layer 120 outside a cap body 110 but also a protective layer 120' on an inner circumferential surface of an insertion space S of a fastening member.

That is, in the embodiment of FIG. 2, no protective layer is provided on an inner circumferential surface of the cap body 110, which is not exposed to the outside, whereas in the present embodiment, the cap protective layer 120' such as a glass fiber tape or a mica tape is also provided on the inner circumferential surface of the cap body 110.

As in the second embodiment, when both the inner and outer circumferential surfaces of the cap body 110 are covered with the cap protective layers 120' and 120, the following advantages are achieved.

The protective layers 120' and 120 on the inner and outer circumferential surfaces of the cap body 110 reliably function as fire-resistant walls to prevent a fire-resistant silicone of the cap body 110 from being exposed to flames.

In addition, because the cap protective layers 120' and 120 on the inner and outer circumferential surfaces completely cover the cap body 110 therebetween, the cap protective layers 120 and 120' support the cap body 110 to maintain the shape and dimensions of the cap body 110 more stably when the cap body 110 is ceramicized at a high temperature and thus the strength thereof decreases slightly.

### (Third Embodiment)

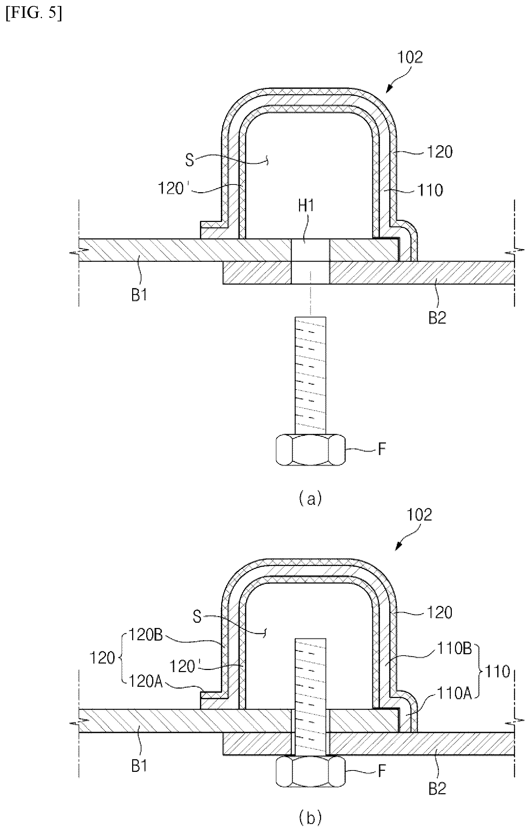

FIG. 5 is a side cross-sectional view illustrating a coupling relationship between a fire-resistant bus bar cap and a bus bar according to another embodiment of the present invention.

In a fire-resistant bus bar cap 102 of the present embodiment, a cap body 110 includes a base part 110A and a fastening member insertion part 110B.

The base part 110A may cover either sides of a bus bar B1 or the sides of the bus bar B1 and sides of an electrical connection part B2 corresponding to the bus bar B1. To this end, the base part 110A may be in the form of a flange part wider than a fastening member insertion part 110B. The base part 110A covers either the sides of the bus bar B1 or the bus bar B1 and the electrical connection part B2 corresponding to the bus bar B1, thereby further ensuring insulation of the bus bar B1 and the electrical connection part B2. Only the base part 110A corresponding to exposed sides of the bus bar B1 and the electrical connection part B2 may be extended long downward to cover only the exposed sides. However, the shape of the base part 110A is not limited thereto, and a different type of a base part is available as long as it can cover the sides of the bus bar B1 or the sides of bus bar B1 and the electrical connection part B2 coupled to the bus bar B1.

In addition, the fastening member insertion part 110B extends upward from the base part 110A and includes an insertion space S of a fastening member therein. The fastening member insertion part 110B covers upper surfaces of the bus bar B1 and the electrical connection part B2.

A protective layer 120 covering the cap body 110 is provided according to the shape of the cap body 110. Therefore, the protective layer 120 may include a base part protective layer 120A covering the base part 110A and an insertion part protective layer 120B covering the fastening member insertion part 110B.

Meanwhile, as shown in FIG. 5, a protective layer 120' may also be included on an inner circumferential surface of the fastening member insertion part 110B.

### (Fourth Embodiment)

FIG. 6 is a side cross-sectional view illustrating a coupling relationship between a fire-resistant bus bar cap and a bus bar according to another embodiment of the present invention.

A fire-resistant bus bar cap 103 of the present embodiment includes a screw groove S1 corresponding to a screw thread of a fastening member F along an inner circumferential surface of a cap body 110 including an insertion space S of the fastening member F.

In the first to third embodiments, the insertion space S of the fastening member F is relatively larger than the fastening member F. Accordingly, the cap body 110 is movable with respect to the fastening member F.

In the present embodiment, the screw groove S1 is formed in the inner circumferential surface of the cap body 110 to be directly coupled to the screw thread of the fastening member F. That is, the fastening member F may be easily coupled to the screw groove S1 by rotating the cap body 110 in a screw rotation direction. Accordingly, the fire-resistant bus bar cap 103 can be reliably coupled to the fastening member F, the bus bar B1, and the electrical connection part B2 to further enhance an insulation level.

### (Fifth Embodiment)

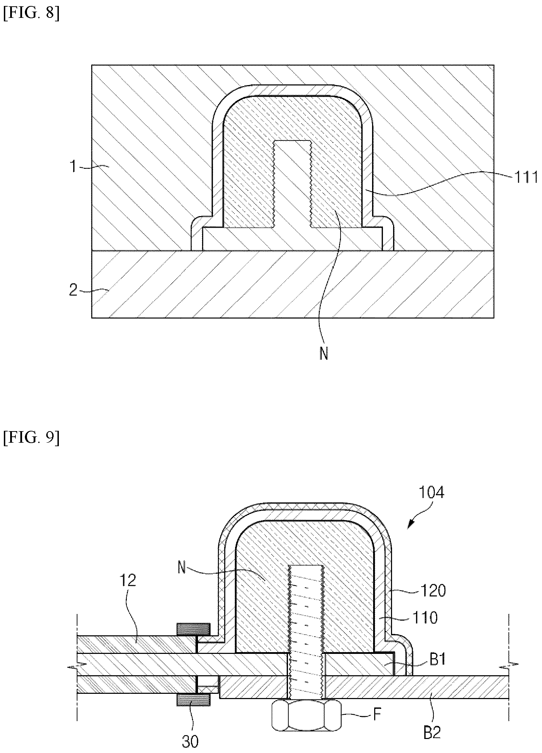

FIG. 7 is a side cross-sectional view illustrating a coupling relationship between a fire-resistant bus bar cap and a bus bar according to another embodiment of the present invention. FIG. 8 is a schematic diagram illustrating a molding process of the fire-resistant bus bar cap of FIG. 7.

In a fire-resistant bus bar cap 104 of the present embodiment, a screw coupling member N, which is to be coupled to a fastening member F, is coupled to an insertion space S of the fastening member F. For example, the screw coupling member N such as a nut is coupled to the insertion space S of a cap body 110. Therefore, referring to FIG. 7, the screw coupling member N inside the fire-resistant bus bar cap 104 is screw-coupled to the fastening member F by coupling the fastening member F to fastening holes of two bus bars B1 and B2 and screw-rotating the fire-resistant bus bar cap 104 with respect to a protruding screw-coupling part of the fastening member F. Accordingly, the fire-resistant bus bar cap 104 may be more firmly coupled to the bus bars B1 and B2 and the fastening member F while covering the bus bars B1 and B2. Therefore, the insulation performance of the fire-resistant bus bar cap 104 of the present embodiment may further improve.

The fire-resistant bus bar cap 104 of the present embodiment may be manufactured by so-called insert injection molding. As shown in FIG. 8, the cap body 110 of the fire-resistant bus bar cap 104 of the present embodiment may be manufactured by insert-injection molding performed by inserting the screw coupling member N between upper and lower molds 1 and 2 in which an outline shape 111 of the fire-resistant bus bar cap 104 is formed and injection molding the fire-resistant silicone into a space of the outline shape 111. The screw coupling member N may be easily integrally coupled to the cap body 110 by the above-described insert-injection molding method.

After the fire-resistant silicone of the fire-resistant silicon cap body 110 is dried and cured, the fire-resistant bus bar cap 104 of the present embodiment may be obtained by coating an outer side of the cap body 110 with a protective layer.

Meanwhile, the fire-resistant bus bar cap 100, 101, 102, 103, or 104 according to the present invention may be attached to a sheath layer 12 of the bus bar B1. As shown in FIG. 9, a bus bar and a fire-resistant bus bar cap may be coupled to each other by coupling an end of the sheath layer 12 and a lower end (base part) of the fire-resistant bus bar cap, for example, through a wear-resistant tape 30.

### (Battery Pack)

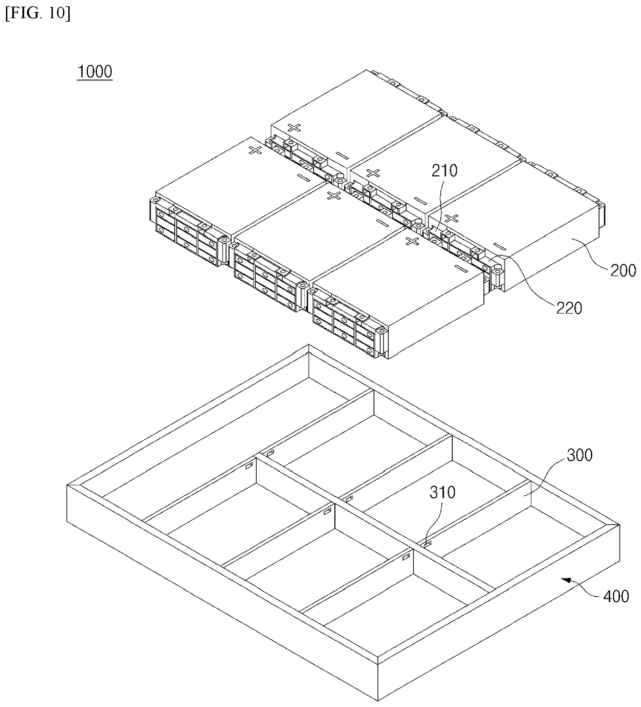

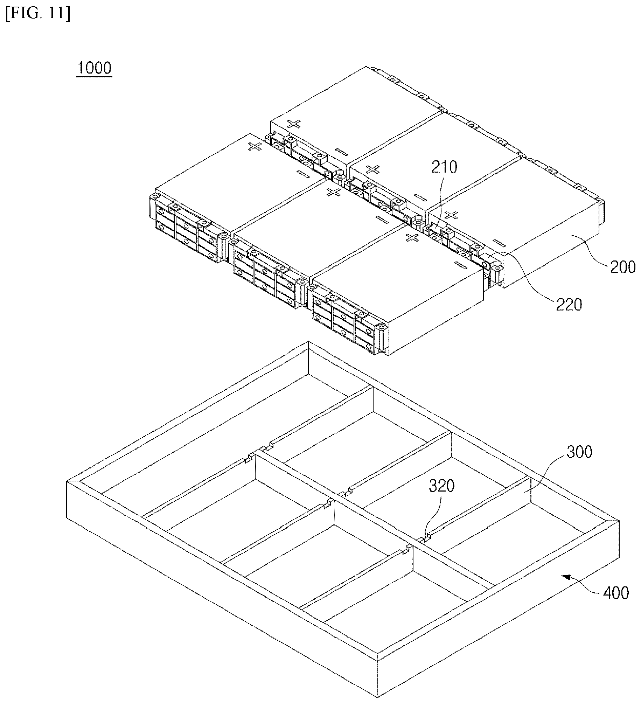

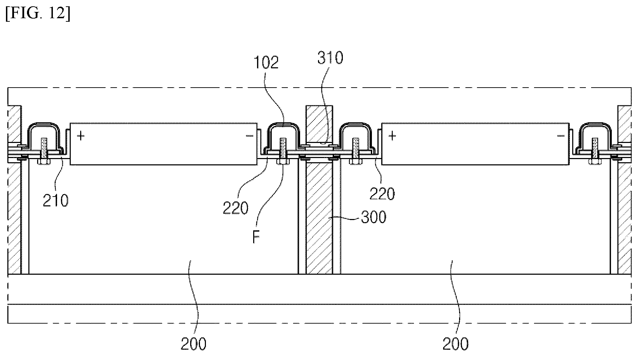

FIG. 10 is a schematic view illustrating an example of a structure of a battery pack in which a fire-resistant bus bar of the present invention is installed. FIG. 11 is a schematic view illustrating another example of a structure of a battery pack in which a fire-resistant bus bar of the present invention is installed. FIG. 12 is a side cross-sectional view illustrating a state in which a fire-resistant bus bar according to the present invention is installed in a battery pack.

The above-described fire-resistant bus bar caps 100, 101, 102, 103 and 104 of the present invention each include the cap body 110 ceramicized at high temperatures and the protective layer 120 covering the cap body 110 to maintain a shape. Therefore, the safety of a battery pack can be greatly improved by applying the fire-resistant bus bar cap 100, 101, 102, 103 or104 to the battery pack in which ignition may occur.

Particularly, high-voltage terminal parts of battery modules generate relatively high heat due to a high current. Accordingly, higher heat may be concentrated on the high-voltage terminal parts when flames occur in the pack. Therefore, the fire-resistant bus bar caps 100, 101, 102, 103, and 104 of the present invention are available as insulating caps covering electrical connection parts of high-voltage terminal parts of a plurality of battery modules.

A battery pack 1000 of the present invention may include a plurality of battery modules 200, anti-flame partitions 300 installed between the battery modules 200, bus bars B1 and B2 for electrically connecting the battery modules 200, the fire-resistant bus bar caps 100, 101, 102, 103 and 104 covering the battery modules 200 and electrical connection parts of the bus bars B1 and B2, and a pack housing 400 accommodating the battery modules 200 and the anti-flame partitions 300.

FIG. 10 illustrates that the plurality of battery modules 200 are accommodated in the pack housing 400. The battery modules 200 each include a cell stack (not shown) in which a plurality of battery cells are stacked, and cell leads with different polarities are drawn out from the battery cells of the cell stack. The cell leads are electrically connected to a bus bar such as a terminal bus bar or an inter-bus bar. A fire-resistant bus bar of the present invention may be used to electrically connect the plurality of battery modules.

Meanwhile, FIGS. 10 and 11 illustrate a general battery module 200 in which a module housing completely surrounds upper, lower, left, and right sides of a battery cell stack. However, the present invention is not limited thereto, and a fire-resistant bus bar cap of the present invention is also applicable to a battery module with a moduleless type module housing in which at least one of upper, lower, left and right sides of a cell stack is open or a battery cell block in which all of upper, lower, left and right sides of a cell stack are open. As described above, a battery pack with a so-called cell-to-pack structure may be configured by installing therein cell blocks or battery modules, in which part of or an entire module housing is omitted. The fire-resistant bus bar caps 100, 101, 102, 103 and 104 of the present invention may be used for electrical connection of cell blocks or moduleless type battery modules installed in such a battery pack having the cell-to-pack structure.

In order to prevent flame propagation between adjacent modules, the battery pack 1000 may include the anti-flame partitions 300 installed between battery modules. The anti-flame partitions 300 may be formed of a metal to secure rigidity. The anti-flame partitions 300 prevent flames from propagating to adjacent modules when a fire occurs in one module. In this case, the anti-flame partitions 300 may be each provided with a bus bar installation through-hole 310 or a bus bar installation groove 320. FIG. 10 illustrates that the anti-flame partition 300 is provided with the bus bar installation through-hole 310. FIG. 11 illustrates that the anti-flame partition 300 is provided with the bus bar installation groove 320. In terms of flame prevention and airtightness, a partition is preferably provided with the bus bar installation through-hole 310 as shown in FIG. 10. An upper part of the bus bar installation groove 320 of FIG. 11 is open, thus facilitating installation of a bus bar and an electrical connection using the bus bar.

The bus bar B1 may be mounted in the bus bar installation through-hole 310 or the bus bar installation groove 320. In this case, both ends of the bus bar B1 may be electrically coupled to terminal parts 210 and 220 of battery modules 200 located at both sides of the anti-flame partition 300.

FIGS. 10 and 11 illustrate that the bus bar electrically connects the battery modules 200 in the battery pack 1000. The anti-flame partition 300 may be located between adjacent battery modules 200 and provided with the bus bar installation through-hole 310. A busbar is seated in the bus bar installation through-hole 310. The fire-resistant bus bar caps 100, 101, 102, 103, and 104 cover both ends of the bus bar and coupling parts of the terminal parts 210 and 220.

Meanwhile, when flames occur in the battery pack 1000, the cap bodies 110 of the fire-resistant silicone of the fire-resistant bus bar caps 100, 101, 102, 103, and 104 of the present invention are ceramicized to form a dense sintered body. That is, at a high temperature of 500 °C or higher, the cap bodies 110 of the fire-resistant silicone are ceramicized and thus the shapes thereof are maintained, unlike conventional heat-resistant silicone that is burned away or burned into ashes. Accordingly, the fire-resistant bus bar caps 100, 101, 102, 103, and 104 may stably cover the coupling parts to maintain insulation of the coupling parts. The protective layer 120 prevents the cap body 110 from being in direct contact with flames, thus preventing the deformation of fire-resistant silicone and further enhancing insulation and fire resistance.

### [Experimental Examples]

### (Experimental Example 1)

A sample of Example 1 was prepared by attaching a 0.18 mm glass fiber tape (product name: AGT6WO) manufactured by SWECO to a fire-resistant silicone sample containing 50 parts by weight of the silicone compound of Chemical Formula 1, 20 parts by weight of quartz, 30 parts by weight of pure silicon dioxide and having a size of 105×105×1 mm.

A sample of Example 2 was prepared by attaching a 0.18 mm mica tape (product name: SA765) manufactured by SWECO to the fire-resistant silicone sample.

A glass fiber tape of AGT6WO and a mica tape of SA765 were alternately stacked a plurality of times to prepare samples of Comparative Examples 1 and 2 each having the same size and thickness as Embodiments 1 and 2.

Entire surfaces of the samples of Examples 1 and 2 and Comparative Example 1 were uniformly heated for three minutes by a large torch with a flame temperature of 1100 to 1150 °C and backside temperatures thereof were measured. Measurement results are shown in Table 1 below.

**[Table 1]**

| Experimental Example 1 | Composition of Samples | Backside Temperature of Sample |
|---|---|---|
| Comparative Example 1 | two sheets of mica tape+four sheets of glass fiber tape | 560 °C |
| Comparative Example 2 | Four sheets of mica tape+two sheets of glass fiber tape | 440 °C |
| Example 1 | fire-resistant silicone+glass fiber tape | 405 °C |
| Example 2 | fire-resistant silicone+mica tape | 350 °C |

As shown in Table 1 above, rates of increase of backside temperatures of the samples of Examples 1 and 2 including the fire-resistant silicone sample and the protective layer applied to the fire-resistant bus bar cap of the present invention are lower than those of the samples of Comparative Examples 1 and 2.

Therefore, it can be seen that insulation characteristics of the fire-resistant bus bar cap of the present invention including the cap body of the fire-resistant silicone and the protective layer are excellent. In particular, insulation performance of Example 2 in which the mica tape was used as the protective layer is better than those of the examples in which the glass fiber tape was used as the protective layer.

### (Experimental Example 2)

Fire-resistant silicone samples with compositions shown in Table 2 below were prepared while changing a weight ratio between the silicone compound of Chemical Formula 1 and a metal oxide.

Samples of Examples 1-1 to 1-5 were prepared by attaching a mica tape (product name: SA765) manufactured by SWECO and having a thickness of 0.18 mm to a fire-resistant silicone sample having a composition of Table 2.

Entire surfaces of the samples of Examples 1-1 to 1-15 were uniformly heated for three minutes by a large torch with a flame temperature of 1100 to 1150 °C and backside temperatures thereof were measured. Measurement results are shown in Table 2 below.

**[Table 2]**

| Experimental Example 2 | Composition of Fire-Resistant Silicone | Backside Temperature of Sample |
|---|---|---|
| Example 1-1 | 50 parts by weight of silicone compound: 50 parts by weight of metal oxide | 350 °C |
| | (quartz: 20 parts by weight, pure silicon dioxide: 30 parts by weight) | |
| Example 1-2 | 50 parts by weight of silicone compound: 25 parts by weight of metal oxide | 380 °C |
| | (quartz: 10 parts by weight, pure silicon dioxide: 15 parts by weight) | |
| Example 1-3 | 50 parts by weight of silicone compound: 75 parts by weight of metal oxide | 330 °C |
| | (quartz: 30 parts by weight, pure silicon dioxide: 45 parts by weight) | |
| Example 1-4 | 50 parts by weight of silicone compound: 20 parts by weight of metal oxide | 390 °C |
| | (quartz: 10 parts by weight, pure silicon dioxide: 10 parts by weight) | |
| Example 1-5 | 50 parts by weight of silicone compound: 80 parts by weight of metal oxide | 321 °C |
| | (quartz: 35 parts by weight, pure silicon dioxide: 45 parts by weight) | |

In Examples 1-1 to 1-5 above, weight ratios between the silicone compounds and the metal oxides were 1:1, 1:0.5, 1:1.5, 1:0.4, and 1:1.6.

The backside temperatures of the samples of all the examples were lower than those of the samples of Comparative Examples 1 and 2. However, the backside temperature of Example 1-4 in which the weight ratio of the metal oxide is less than 0.5 was somewhat high, and it is determined that the high backside temperature was due to the generation of a slight insufficient amount of a ceramic structure having a high-density crystal structure at high temperatures due to an insufficient amount of the metal oxide.

The backside temperature of Example 1-5 in which the weight ratio of the metal oxide is 1.6 was sufficiently low but the amount of the metal oxide was excessive and thus the flexibility of the fire-resistant silicone decreased at room temperature, thus making it difficult to mold a fire-resistant bus bar cap.

The present invention has been described above in more detail with reference to the drawings, the embodiments, etc.

### (Reference Numerals)

100, 101, 102, 103, 104: fire-resistant bus bar cap
110: cap body of fire-resistant silicone
110A: base part
110B: fastening member insertion part
120, 120': protective layer
120A: base part protective layer
120B: insertion part protective layer
S: insertion space of fastening member
H1, H2: fastening hole
B1, B2: bus bar
S1: screw groove
N: screw coupling member
200: battery module
210, 220: terminal part
300: anti-flame partition
310: bus bar installation through-hole
320: bus bar installation groove
400: pack housing
1000: battery pack

## Claims

1. A fire-resistant bus bar cap (100, 101, 102, 103, 104) which covers a bus bar (B1, B2) and an electrical connection part coupled to the bus bar (B1, B2), the fire-resistant bus bar cap (100, 101, 102, 103, 104) comprising:
a cap body (110) that includes therein an insertion space of a fastening member for fastening the bus bar (B1, B2) and the electrical connection part; and
a protective layer (120) covering the cap body (110) of the fire-resistant silicone, **characterized in that** the cap body (110) is of a fire resistant silicone ceramicized at high temperature, and
wherein the cap body (110) of the fire-resistant silicone is ceramicized by sintering a silicone resin containing a silicone compound represented by Chemical Formula 1 below and a metal oxide containing silicon oxide, wherein: 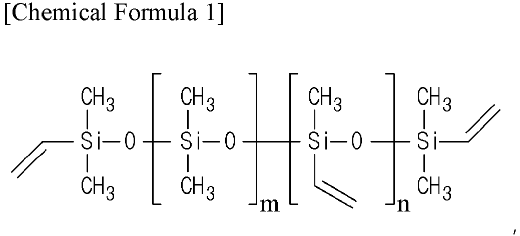
wherein m and n are each an integer of 10 to 30.

2. The fire-resistant bus bar cap (100, 101, 102, 103, 104) of claim 1, wherein the cap body (110) of the fire-resistant silicone is ceramicized at a temperature of 500 to 1700 °C.

3. The fire-resistant bus bar cap (100, 101, 102, 103, 104) of claim 1, wherein the silicone resin and the metal oxide are contained in a weight ratio of 1:0.5 to 1:1.5.

4. The fire-resistant bus bar cap (100, 101, 102, 103, 104) of claim 1, wherein the metal oxide containing silicon oxide comprises at least one of pure silicon dioxide, silica, quartz, silica stone, tridymite, and keatite.

5. The fire-resistant bus bar cap (100, 101, 102, 103, 104) of claim 1, wherein the protective layer (120) comprises a glass fiber layer or a mica layer.

6. The fire-resistant bus bar cap (100, 101, 102, 103, 104) of claim 1, wherein the protective layer (120) is provided on an inner circumferential surface of the insertion space of the fastening member of the cap body (110) of the fire-resistant silicone.

7. The fire-resistant bus bar cap (100, 101, 102, 103, 104) of claim 1, wherein the cap body (110) of the fire-resistant silicone comprises:
a base part (110A) configured to cover either sides of the bus bar (B1, B2) or the sides of the bus bar (B1, B2) and sides of the electrical connection parts; and
a fastening member insertion part (110B) extending upward from the base part (110A), including the insertion space of the fastening member therein, and configured to cover upper surfaces of the bus bar (B1, B2) and the electric connection part.

8. The fire-resistant bus bar cap (100, 101, 102, 103, 104) of claim 1, wherein a screw groove (S1) corresponding to a screw thread of the fastening member is provided along an inner circumferential surface of the cap body (110) of the fire-resistant silicone including the insertion space of the fastening member.

9. The fire-resistant bus bar cap (100, 101, 102, 103, 104) of claim 1, wherein a screw coupling member (N) configured to be coupled to the fastening member is coupled to the insertion space of the fastening member.

10. The fire-resistant bus bar cap (100, 101, 102, 103, 104) of claim 9, wherein the screw coupling member (N) is integrally coupled to the fire-resistant bus bar cap (100, 101, 102, 103, 104) by insert injection molding performed by inserting the screw coupling member (N) into a mold and injection molding the fire-resistant silicone.

11. A battery pack (1000) comprising:
a plurality of battery modules (200);
an anti-flame partition (300) installed between the plurality of battery modules (200) ;
a bus bar (B1, B2) configured to electrically connect the plurality of battery modules (200);
the fire-resistant bus bar cap (100, 101, 102, 103, 104) of any one of claims 1 to 10 for covering the plurality of battery modules (200) and the electrical connection part of the bus bar (B1, B2); and
a pack housing (400) accommodating the plurality of battery modules (200) and the anti-flame partition (300).

12. The battery pack (1000) of claim 11, wherein the anti-flame partition (300) is provided with a bus bar installation through-hole (310) or a bus bar installation groove (320),
the bus bar (B1, B2) is seated in the bus bar installation through-hole (310) or the bus bar installation groove (320),
both ends of the bus bar (B1, B2) are electrically coupled to terminal parts (210, 220) of battery modules (200) located at both sides of the anti-flame partition (300), and
the fire-resistant bus bar cap (100, 101, 102, 103, 104) covers the both ends and electrical connection parts of the terminal parts (210, 220).

## Patentansprüche

1. Feuerfeste Sammelschienenkappe (100, 101, 102, 103, 104), die eine Sammelschiene (B1, B2) und ein elektrisches Verbindungsteil, das mit der Sammelschiene (B1, B2) gekoppelt ist, bedeckt, wobei die feuerfeste Sammelschienenkappe (100, 101, 102, 103, 104) umfasst:
einen Kappenkörper (110), der darin einen Einführraum eines Befestigungselements zum Befestigen der Sammelschiene (B1, B2) und des elektrischen Verbindungsteils enthält; und
eine Schutzschicht (120), die den Kappenkörper (110) aus dem feuerfesten Silikon bedeckt, **dadurch gekennzeichnet, dass** der Kappenkörper (110) aus einem feuerfesten Silikon besteht, das bei hoher Temperatur keramisiert ist, und
wobei der Kappenkörper (110) aus dem feuerfesten Silikon keramisiert ist durch Sintern eines Silikonharzes, das eine Silikonverbindung enthält, die durch die chemische Formel 1 unten dargestellt ist, und eines Metalloxids, das Siliziumoxid enthält, wobei: 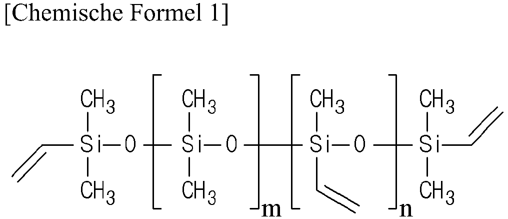
wobei m und n jeweils eine ganze Zahl von 10 bis 30 sind.

2. Feuerfeste Sammelschienenkappe (100, 101, 102, 103, 104) nach Anspruch 1, wobei der Kappenkörper (110) aus dem feuerfesten Silikon bei einer Temperatur von 500 bis 1700 °C keramisiert ist.

3. Feuerfeste Sammelschienenkappe (100, 101, 102, 103, 104) nach Anspruch 1, wobei das Silikonharz und das Metalloxid in einem Gewichtsverhältnis von 1:0,5 bis 1:1,5 enthalten sind.

4. Feuerfeste Sammelschienenkappe (100, 101, 102, 103, 104) nach Anspruch 1, wobei das Metalloxid, das Siliziumoxid enthält, mindestens eines von reinem Siliziumdioxid, Siliciumdioxid, Quarz, Quarzstein, Tridymit und Keatit umfasst.

5. Feuerfeste Sammelschienenkappe (100, 101, 102, 103, 104) nach Anspruch 1, wobei die Schutzschicht (120) eine Glasfaserschicht oder eine Glimmerschicht umfasst.

6. Feuerfeste Sammelschienenkappe (100, 101, 102, 103, 104) nach Anspruch 1, wobei die Schutzschicht (120) auf einer Innenumfangsfläche des Einführraums des Befestigungselements des Kappenkörpers (110) aus dem feuerfesten Silikon bereitgestellt ist.

7. Feuerfeste Sammelschienenkappe (100, 101, 102, 103, 104) nach Anspruch 1, wobei der Kappenkörper (110) aus dem feuerfesten Silikon umfasst:
ein Basisteil (110A), das konfiguriert ist, um beide Seiten der Sammelschiene (B1, B2) oder die Seiten der Sammelschiene (B1, B2) und Seiten der elektrischen Verbindungsteile zu bedecken; und
ein Befestigungselement-Einführteil (110B), das sich von dem Basisteil (110A) nach oben erstreckt, das den Einführraum des Befestigungselements darin enthält, und konfiguriert ist, um obere Flächen der Sammelschiene (B1, B2) und des elektrischen Verbindungsteils zu bedecken.

8. Feuerfeste Sammelschienenkappe (100, 101, 102, 103, 104) nach Anspruch 1, wobei eine Schraubennut (S1), die einem Schraubengewinde des Befestigungselements entspricht, entlang einer Innenumfangsfläche des Kappenkörpers (110) aus dem feuerfesten Silikon bereitgestellt ist, die den Einführraum des Befestigungselements enthält.

9. Feuerfeste Sammelschienenkappe (100, 101, 102, 103, 104) nach Anspruch 1, wobei ein Schraubenkopplungselement (N), das konfiguriert ist, um mit dem Befestigungselement gekoppelt zu werden, mit dem Einführraum des Befestigungselements gekoppelt ist.

10. Feuerfeste Sammelschienenkappe (100, 101, 102, 103, 104) nach Anspruch 9, wobei das Schraubenkopplungselement (N) integral mit der feuerfesten Sammelschienenkappe (100, 101, 102, 103, 104) durch Einsatzspritzgießen gekoppelt ist, das durch Einführen des Schraubenkopplungselements (N) in eine Form und Spritzgießen des feuerfesten Silikons durchgeführt wird.

11. Batteriepack (1000), umfassend:
eine Vielzahl von Batteriemodulen (200);
eine Entflammungstrennwand (300), die zwischen der Vielzahl von Batteriemodulen (200) installiert ist;
eine Sammelschiene (B1, B2), die konfiguriert ist, um die Vielzahl von Batteriemodulen (200) elektrisch zu verbinden;
die feuerfeste Sammelschienenkappe (100, 101, 102, 103, 104) nach einem der Ansprüche 1 bis 10 zum Bedecken der Vielzahl von Batteriemodulen (200) und des elektrischen Verbindungsteils der Sammelschiene (B1, B2); und
ein Packgehäuse (400), das die Vielzahl von Batteriemodulen (200) und die Entflammungstrennwand (300) aufnimmt.

12. Batteriepack (1000) nach Anspruch 11, wobei die Entflammungstrennwand (300) mit einem Sammelschieneninstallationsdurchgangsloch (310) oder einer Sammelschieneninstallationsnut (320) versehen ist,
die Sammelschiene (B1, B2) in dem Sammelschieneninstallationsdurchgangsloch (310) oder der Sammelschieneninstallationsnut (320) sitzt,
beide Enden der Sammelschiene (B1, B2) mit Anschlussteilen (210, 220) von Batteriemodulen (200), die sich auf beiden Seiten der Entflammungstrennwand (300) befinden, elektrisch gekoppelt sind, und
die feuerfeste Sammelschienenkappe (100, 101, 102, 103, 104) die beiden Enden und elektrischen Verbindungsteile der Anschlussteile (210, 220) bedeckt.

## Revendications

1. Couvercle ignifuge pour barre omnibus (100, 101, 102, 103, 104) couvrant une barre omnibus (B1, B2) et un dispositif de connexion électrique couplé à la barre omnibus (B1, B2), le couvercle ignifuge pour barre omnibus (100, 101, 102, 103, 104) comprenant :
un corps de couvercle (110) incorporant un espace d'insertion d'un organe de fixation pour fixer la barre omnibus (B1, B2) et le dispositif de connexion électrique ; et
une couche de protection (120) couvrant le corps de couvercle (110) du silicone ignifuge, **caractérisé en ce que** le corps de couvercle (110) est composé d'un silicone ignifuge céramisé à haute température, et
le corps de couvercle (110) du silicone ignifuge étant céramisé par frittage d'une résine de silicone contenant un composé de silicone illustré par la formule chimique 1 ci-dessous, et un oxyde de silicium contenant un métal-oxyde, 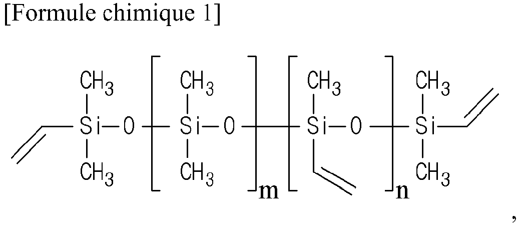
m et n étant chacun un nombre entier entre 10 et 30.

2. Couvercle ignifuge pour barre omnibus (100, 101, 102, 103, 104) selon la revendication 1, le corps de couvercle (110) du silicone ignifuge étant céramisé à une température comprise entre 500 et 1 700°C.

3. Couvercle ignifuge pour barre omnibus (100, 101, 102, 103, 104) selon la revendication 1, la résine de silicone et le métal-oxyde étant contenus avec un rapport pondéral allant de 1 / 0,5 à 1 / 1,5.

4. Couvercle ignifuge pour barre omnibus (100, 101, 102, 103, 104) selon la revendication 1, le métal-oxyde contenant de l'oxyde de silicium comprenant au moins un des suivants : dioxyde de silicium pur, silice, quartz, pierre de silice, tridymite et keatite.

5. Couvercle ignifuge pour barre omnibus (100, 101, 102, 103, 104) selon la revendication 1, la couche de protection (120) comprenant une couche de fibre de verre ou une couche de mica.

6. Couvercle ignifuge pour barre omnibus (100, 101, 102, 103, 104) selon la revendication 1, la couche de protection (120) étant agencée sur une surface circonférentielle intérieure de l'espace d'insertion de l'élément de fixation du corps du couvercle (110) du silicone ignifuge.

7. Couvercle ignifuge pour barre omnibus (100, 101, 102, 103, 104) selon la revendication 1, le corps du couvercle (110) du silicone ignifuge comprenant :
une partie de base (110A) configurée pour couvrir l'un ou l'autre des côtés de la barre omnibus (B1, B2), ou les côtés de la barre omnibus (B1, B2) et des côtés des éléments de connexion électrique ; et
une partie d'insertion d'élément de fixation (110B) s'étendant de l'élément de base (110A) vers le haut, y compris l'espace d'insertion de l'élément de fixation dedans, et configurée pour couvrir des surfaces supérieures de la barre omnibus (B1, B2) et l'élément de connexion électrique.

8. Couvercle ignifuge pour barre omnibus (100, 101, 102, 103, 104) selon la revendication 1, un pas de vis (S1) correspondant à un filet de l'élément de fixation étant agencé le long d'une surface circonférentielle intérieure du corps du couvercle (110) du silicone ignifuge, y compris l'espace d'insertion de l'élément de fixation.

9. Couvercle ignifuge pour barre omnibus (100, 101, 102, 103, 104) selon la revendication 1, un élément d'accouplement à vis (N) configuré pour être couplé à l'élément de fixation étant couplé à l'espace d'insertion de l'élément de fixation.

10. Couvercle ignifuge pour barre omnibus (100, 101, 102, 103, 104) selon la revendication 9, l'élément d'accouplement à vis (N) étant couplé de façon intégrale au couvercle ignifuge pour barre omnibus (100, 101, 102, 103, 104) par un moulage par insertion effectué en insérant l'élément d'accouplement à vis (N) dans un moule puis en moulant par injection de silicone ignifuge.

11. Bloc-batterie (1000) comprenant :
une pluralité de modules de batterie (200) ;
une cloison anti-flamme (300) installée entre la pluralité de modules de batterie (200) ;
une barre omnibus (B1, B2) configurée pour connecter électriquement la pluralité de modules de batterie (200) ;
le couvercle ignifuge pour barre omnibus (100, 101, 102, 103, 104) selon une quelconque des revendications 1 à 10 pour couvrir la pluralité de modules de batterie (200) et la partie de connexion électrique de la barre omnibus (B1, B2) ; et
un boîtier de bloc (400) contenant la pluralité de modules de batterie (200) et la cloison anti-flamme (300).

12. Bloc-batterie (1000) selon la revendication 11, la cloison anti-flamme (300) étant agencée avec un orifice traversant pour l'installation d'une barre omnibus (310) ou une rainure d'installation d'une barre omnibus (320),
la barre omnibus (B1, B2) étant installée dans l'orifice d'installation d'une barre omnibus (310) ou la rainure d'installation d'une barre omnibus (320),
les deux bouts de la barre omnibus (B1, B2) étant couplés électriquement aux parties de bornes (210, 220) des modules de batterie (200) situés sur les deux côtés de la cloison anti-flamme (300), et
le couvercle ignifuge pour barre omnibus (100, 101, 102, 103, 104) couvrant les deux bouts et les parties de connexion électrique des parties de bornes (210, 220).
